# EUROPÄISCHE PATENTANMELDUNG

(11) **EP 0 794 375 A2**
(43) Veröffentlichungstag der Anmeldung: **10.09.1997**
(21) Anmeldenummer: 97102624.0
(22) Anmeldetag: 19.02.1997
(51) Int. Cl.: F16L 5/10, E03C 1/02

(54) **Dichtungsmuffe für Rohre**

(30) Priorität: 05.03.1996 DE 29604043 U
(71) Anmelder: Dallmer GmbH & Co., D-59757 Arnsberg (DE)
(72) Erfinder: Dallmer, Johannes, 59757 Arnsberg (DE)
(74) Vertreter: Fritz, Edmund Lothar, Dipl.-Chem.

(57) **Zusammenfassung**

Dichtungsmuffe für Rohre, die aus einem elastischen Werkstoff besteht, geeignet zum Aufstecken auf den Endbereich eines Rohrstutzen, wobei zur Abdichtung innen an der Muffe Dichtungslippen (11) angeformt sind. Außen im Endbereich der Muffe wird von einem angeformten Ring (12) mit einer Nut (121) ein Folienblatt (13) aufgenommen ist, geeignet zur Aufnahme eines Klebers an der Innenseite und an der Außenseite.

## Beschreibung

Der Erfindung liegt die Aufgabe zugrunde, eine Fliesenwand, z.B. eine Badesimmerwand, im Bereich der Mündung eines Rohrstutzens der Sanitärinstallation wasserdicht zu machen.

Diese Aufgabe wird mit Hilfe einer speziell nach der Erfindung ausgebildeten Dichtungsmuffe in einfacher Weise gelöst. Die Dichtungsmuffe nach der Erfindung wird vor dem Verlegen der Fliesen auf den Endbereich eines bereits in die Wand eingebauten Rohrstutzens für eine Wasserleitung aufgesteckt. Durch innen an der elastischen Dichtungsmuffe angeformte Lippen ergibt sich eine gute Abdichtung zwischen dieser und dem Rohrstutzen. Ein mit der Muffe integriertes Folienblatt wird unmittelbar an die massive Wand, an der die Fliesen angebracht werden sollen, oder an dafür vorgesehene Gipskartonplatten angeklebt. Die Dichtigkeit erstreckt sich somit auch auf diesen Bereich. Da das Folienblatt auch außenseitig zur Aufnahme eines Klebers geeignet ist, kann der Fliesenbelag durchgehend bis an die Mündung des Rohrstutzens ausgedehnt werden. In an sich bekannter Weise werden die wasserführenden Installationselemente an den Rohrstutzen angeschraubt, wobei die Umgebung desselben mit einer Rosette abgedeckt wird.

Eine Dichtungsmuffe nach der Erfindung ist ein einfach herzustellendes Installationsteil, wobei in ebenso einfacher Weise auch die Anwendung erfolgen kann. Insbesondere werden dabei keine plastischen Dichtungsmittel für die Abdichtung benötigt.

Zudem unterbindet eine Muffe nach der Erfindung die Übertragung von Körperschall von den Rohrleitungen auf die Wand.

Im folgenden wird die vorliegende Erfindung anhand eines Ausführungsbeispiels unter Bezugnahme auf die beiliegenden Zeichnungen näher beschrieben. Dabei zeigen
- Fig. 1: zeigt einen Axialschnitt durch eine Dichtungsmuffe nach der Erfindung;
- Fig. 2: ist eine Draufsicht entsprechend II von Fig. 1;
- Fig. 3: stellt einen Schnitt durch einen Rohrstutzen einer Sanitärinstallation dar, der im Bereich der Fliesen mit einer Dichtungsmuffe nach der Erfindung abgedichtet ist;

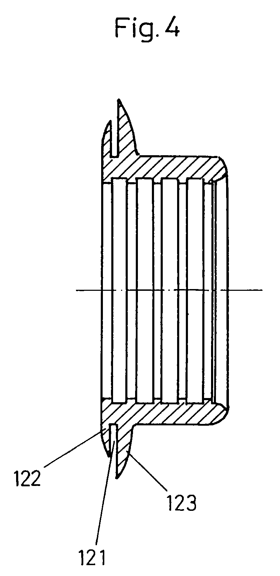

- Fig. 4: zeigt noch einmal den inneren Teil der Dichtungsmuffe in vergrößerter Darstellung.

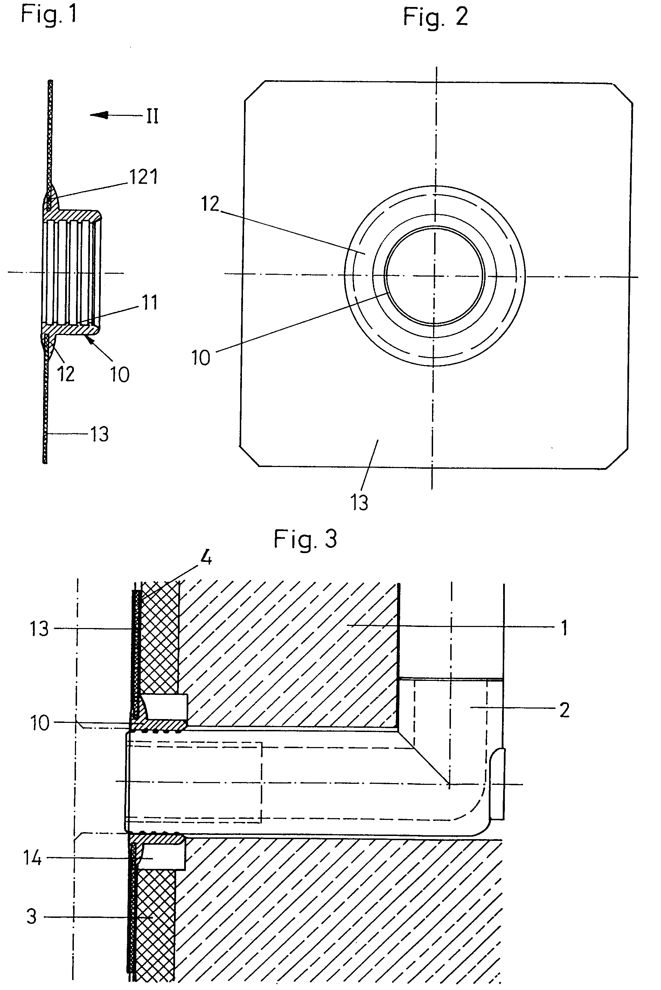

Zunächst wird auf Fig. 1 und Fig. 2 Bezug genommen. Die Dichtungsmuffe 10 besteht aus einem elastischen Werkstoff. Sie ist dafür vorgesehen auf den Endbereich eines Rohrstutzens aufgezogen zu werden wobei für die Abdichtung am Rohrstutzen an der Innenseite Dichtungslippen 11 angeformt sind.

Außen am Rand ist an der Muffe ein Ring 12 angeformt mit einer Nut 121, der ringsum ein im vorliegendem Fall quadratisches Folienblatt 13 fest und dicht aufnimmt. Durch diese ringförmige Nut 121 ist an der Dichtungsmuffe ein äußerer Ringsteg 122 gebildet, der etwas kürzer ist und ein innerer Ringsteg 123, der etwas länger ist, den Ringsteg 122 nach außen etwas überragt, wobei beide Ringstege 122/123 das Folienblatt 13 einfassen. Das Folienblatt ist beidseitig zur Aufnahme eines Klebers geeignet.

Nach Fig. 3 ist in eine massive Wand 1 ein Rohrstutzen 2 einer Sanitärinstallation eingebaut. Der Rohrstutzen endigt im Bereich von Gipskartonplatten 3, mit denen die massive Wand 1 verkleidet ist. An der Mündung des Rohrstutzens im Bereich eines Installationsraumes 14 ist eine elastische Dichtungsmuffe 10 nach der Erfindung auf dem Rohrstutzen 2 aufgesteckt. Dabei ist das Folienblatt 13 mit einem innenseitigen angebrachten Kleber 4 an die Gipskartonplatten 3 angeklebt.

Vorderseitig werden nicht dargestellte Fliesen an die Gipskartonplatten angeklebt, wobei der Fliesenbelag bis an die Mündung des Rohrstutzen ausgedehnt werden kann, denn die Fliesen können auch vorderseitig an das Folienblatt 13 angeklebt werden, denn dieses ist auch vorderseitig zur Aufnahme eines Klebers geeignet.

## Patentansprüche

1. Dichtungsmuffe für Rohre, dadurch gekennzeichnet, daß sie aus einem elastischen Werkstoff besteht, geeignet zum Aufstecken auf den Endbereich eines Rohrstutzen, wobei zur Abdichtung innen an der Muffe Dichtungslippen (11) angeformt sind, und daß außen im Endbereich der Muffe von einem angeformten Ring (12) mit einer Nut (121) ein Folienblatt (13) aufgenommen ist, geeignet zur Aufnahme eines Klebers an der Innenseite und an der Außenseite.
